# EUROPÄISCHE PATENTANMELDUNG

(11) **EP 4 234 460 A1**
(43) Veröffentlichungstag der Anmeldung: **30.08.2023**
(21) Anmeldenummer: 23154476.8
(22) Anmeldetag: 01.02.2023
(51) Int. Cl.: B65G 57/00, B65G 57/03

(54) **KOMMISSIONIERSYSTEM UND -VERFAHREN ZUR AUTOMATISCHEN ZUSAMMENSTELLUNG VON AUFTRAGSSPEZIFISCHEN WARENPALETTEN**

(30) Priorität: 03.02.2022 DE 102022102583
(71) Anmelder: Safelog GmbH, 85570 Markt Schwaben (DE)
(72) Erfinder: Wolter, Michael, 83727 Schliersee (DE)
(74) Vertreter: Grättinger Möhring von Poschinger Patentanwälte Partnerschaft mbB

(57) **Zusammenfassung**

Die vorliegende Erfindung betrifft ein Kommissioniersystem (1) zur automatischen Zusammenstellung von auftragsspezifischen Warenpaletten in einem Zentrallager. Dieses umfasst eine Mehrzahl an Übergabestationen (U₁, U₂, U₃, U₄) zur Bereitstellung von Warenpaletten (W₁, W₂, W₃, W₄) mit den für die auftragsspezifischen Warenpaletten benötigten Waren, eine Mehrzahl an Beladestationen (B₁, B₂, ..., B₁₆) für die auftragsspezifisch zu beladenden Warenpaletten (A₁, A₂, ..., A₁₆), wenigstens ein autonom verfahrbares, fahrerloses Transportfahrzeug (T₁, T₂, T₃) zum An- und Abtransport von Warenpaletten zu den und von den Übergabe- oder Beladestationen (U₁, U₂, U₃, U₄; B₁, B₂, ..., B₁₆), wenigstens einen frontseitig vor den Übergabe- und Beladestationen verfahrbaren Verladeroboter (V), mit dem zur Zusammenstellung von auftragsspezifischen Warenpaletten an den Beladestationen iterativ Waren von den an den Übergabestationen befindlichen Warenpaletten entnehmbar und anschließend auf die an den Beladestationen befindlichen Warenpaletten stapelbar sind, und wenigstens eine Wickelstation (WS) zur Umwicklung einer auftragsspezifischen Warenpalette mit einer Folie. An den Beladestationen ist jeweils eine automatisch entfernbare oder automatisch umpositionierbare Rückwand vorgesehen, die während des Beladens der dortigen Warenpaletten als rückseitiger Anschlag dient.

## Beschreibung

Die vorliegende Erfindung betrifft ein Kommissioniersystem zur automatischen Zusammenstellung von auftragsspezifischen Warenpaletten in einem Zentrallager.

Insbesondere bei den großen Lebensmittel- bzw. Supermarktketten (jedoch auch bei anderen Handelsunternehmen) wird die Belieferung der einzelnen Filialen häufig über ein Zentrallager des betreffenden Unternehmens organisiert. Die an die einzelnen Filialen auszuliefernden Waren werden dabei typischerweise an ein Zentrallager des Unternehmens geliefert und dort bevorratet und müssen dann vor dem Versand an die einzelnen Filialen zu auftragsspezifischen Warenpaletten zusammengestellt werden, wobei hier häufig jede Filiale eine unterschiedliche Anzahl der insgesamt zu verteilenden Waren benötigt.

Bei den dabei zu auftragsspezifischen Warenpaletten (d.h. Paletten mit darauf gestapelten Waren) zusammenzustellenden Waren kann es sich um verschiedenste Waren handeln, die typischerweise bereits auf übliche Weise z.B. einzeln oder in Gruppen in Kartons oder in stapelbaren (Transport-)Behältern verpackt sind.

Aus der WO 2020/014725 A2 und den darin zitierten Druckschriften sind bereits Kommissioniersysteme und Kommissionierverfahren bekannt, mit welchen sich die Zusammenstellung von auftragsspezifischen Warenpaletten unter Verwendung von autonomen, fahrerlosen Transportfahrzeugen automatisieren lässt, wobei es sich bei dem aus der WO 2020/014725 A2 bekannten System als nachteilig erweist, dass dort stets sogenannte Transportladehilfen zur Aufnahme und Lagestabilisierung der zu kommissionierenden Warenträgerstapel benötigt werden.

Vor diesem Hintergrund ist es die Aufgabe der vorliegenden Erfindung, ein Kommissioniersystem und ein Kommissionierverfahren der eingangs genannten Art bereitzustellen, mit welchen sich eine vollautomatische Zusammenstellung von auftragsspezifischen Warenpaletten in einem Zentrallager auf möglichst einfache Art und Weise und mit hohem Warendurchsatz realisieren lässt.

Diese Aufgabe wird durch ein Kommissioniersystem und ein Kommissionierverfahren gemäß den unabhängigen Patentansprüchen gelöst. Die abhängigen Patentansprüche, die vorliegende Beschreibung und die beigefügten Zeichnungen zeigen weitere für ein erfindungsgemäßes Kommissioniersystem und -verfahren für vorteilhaft befundene Merkmale und Aspekte, wobei vorrichtungsbezogene Merkmale und Aspekte selbstverständlich gleichermaßen auch zur vorteilhaften Ausgestaltung des erfindungsgemäßen Verfahrens dienen können und umgekehrt.

Das erfindungsgemäße Kommissioniersystem zur automatischen Zusammenstellung von auftragsspezifischen Warenpaletten in einem Zentrallager umfasst
- eine Mehrzahl an Übergabestationen zur Bereitstellung von Warenpaletten enthaltend die für die auftragsspezifischen Warenpaletten benötigten Waren,
- eine Mehrzahl an Beladestationen für die auftragsspezifisch zu beladenden Warenpaletten,
- wenigstens ein autonom verfahrbares, fahrerloses Transportfahrzeug zum automatischen An- und Abtransport von Warenpaletten zu den und von den Übergabe- oder Beladestationen,
- wenigstens einen frontseitig vor den Übergabe- und Beladestationen verfahrbaren Verladeroboter, mit dem zur Zusammenstellung von auftragsspezifischen Warenpaletten an den Beladestationen Waren von den an den Übergabestationen befindlichen Warenpaletten entnehmbar und anschließend auf die an den Beladestationen befindlichen Warenpaletten stapelbar sind, und
- wenigstens eine Wickelstation zur Umwicklung einer auftragsspezifischen Warenpalette mit einer Folie,
wobei an den Beladestationen jeweils eine automatisch entfernbare oder automatisch umpositionierbare Rückwand vorgesehen ist, die während des Beladens der dortigen Warenpaletten als rückseitiger Anschlag für den auf der Warenpalette zu bildenden Warenstapel dient und die nach vollständiger Beladung der an einer Beladestation befindlichen Warenpalette derart entfernbar oder umpositionierbar ist, dass eine beladene Warenpalette nach Entfernung oder Umpositionierung der Rückwand entweder direkt an der Beladestation mittels einer geeignet positionierten Wickelstation mit Folie umwickelt werden kann oder aber mit einem fahrerlosen Transportfahrzeug auf einem zuvor durch die Rückwand versperrten Verfahrweg zu einer benachbarten Wickelstation transportiert werden kann, um dort mit Folie umwickelt zu werden.

Mit dem erfindungsgemäßen Kommissioniersystem kann somit - wie im Übrigen auch bei dem weiter unten beschriebenen, erfindungsgemäßen Kommissionierverfahren - eine automatische Zusammenstellung von auftragsspezifischen Warenpaletten wie folgt erfolgen:
Im Rahmen der Erfindung werden Warenpaletten mit den zur Bestückung der auftragsspezifischen Warenpaletten benötigten Waren an einer Mehrzahl an hierfür vorgesehenen Übergabestationen bereitgestellt, wobei diese Warenpaletten vorteilhaft mittels des wenigstens eines autonom fahrenden, fahrerlosen Transportfahrzeugs zu der betreffenden Übergabestation transportiert und dort - bevorzugt auf einer fix vorgegebenen Ablageposition der betreffenden Übergabestation - stabil abgesetzt wurden.

Hierzu ist anzumerken, dass es sich bei den an den verschiedenen Übergabestationen bereitgestellten Warenpaletten vorteilhaft um sogenannte sortenreine Warenpaletten handelt, die stets nur Waren einer bestimmten Sorte in gleichen Packungsgrößen beinhalten. Z.B. kann dabei an einer ersten Übergabestation eine Warenpalette mit Äpfeln und an einer zweiten Übergabestation eine Warenpalette mit Birnen bereitgestellt werden, wobei jede Warenpalette vorteilhaft eine Mehrzahl an (übereinander gestapelten und/oder in jeder Stapellage ggfs. mehrere nebeneinander angeordnete) Transportkisten mit Äpfeln bzw. Birnen beinhaltet, wie diese üblicherweise versendet werden. Sofern im Zentrallager auch nicht sortenreine Warenpaletten zu Kommissionierzwecken bevorratet werden, können aber auch diese selbstverständlich verwendet werden.

Da vorliegend in dem erfindungsgemäßen System eine Mehrzahl an Übergabestationen vorgesehen sind, können gleichzeitig unterschiedliche Waren an den verschiedenen Übergabestationen - zur auftragsspezifischen Verladung durch den Verladeroboter an die verschiedenen Beladestationen - bereitgestellt werden.

Ferner werden - wiederum vorteilhaft unter Zuhilfenahme des wenigstens einen fahrerlosen Transportfahrzeugs - an einer Mehrzahl an Beladestationen (zunächst leere) Warenpaletten bereitgestellt, die sodann unter Zuhilfenahme des frontseitig vor den Übergabe- und Beladestationen verfahrbaren Verladeroboters auftragsspezifisch beladen werden können.

Hierzu entnimmt der wenigstens eine Verladeroboter, welcher in zweckmäßiger Weise mit einem geeigneten Greifsystem und geeigneter Sensorik zur Erfassung der zu kommissionierenden Waren und des aktuellen Beladungszustands der jeweiligen Warenpaletten ausgestattet ist, iterativ wiederholend von einer an einer Übergabestation befindlichen Warenpalette eine Ware (z.B. einen Transportbehälter mit Äpfeln), transportiert diese zu einer Beladestation und platziert diese an geeigneter Stelle auf der dortigen Warenpalette, wobei die an der Beladestation (während eines Beladevorgangs) vorgesehene Rückwand als hinterer Anschlag für den sukzessive aus unterschiedlichen Waren zu bildenden Warenstapel dient, was die zuverlässige Stapelbildung mittels des Verladeroboters deutlich erleichtert.

Sofern für die auftragsspezifisch an den Beladestationen zu bildenden Warenpaletten noch weitere Waren benötigt werden, so müssen die betreffenden Waren ersichtlich an einer der Übergabestationen bereitgestellt (und mittels des Verladeroboters der betreffenden Beladestation zugeführt) werden, was im Laufe des Kommissioniervorgangs ggfs. auch einen Austausch der an einer bestimmten Übergabestation bereitgestellten Warenpalette durch eine andere Warenpalette enthaltend die dann noch zu verladenden Waren erfordert.

Da vorliegend in dem erfindungsgemäßen System eine Mehrzahl an Beladestationen vorgesehen sind, können durch iterative Verladung der betreffenden Waren auf die an verschiedenen Beladestationen befindlichen Warenpaletten mittels des Verladeroboters - gewissermaßen gleichzeitig - mehrere unterschiedliche, auftragsspezifische Warenpaletten für den Versand an verschiedene Filialen zusammengestellt werden.

Sobald an einer Beladestation eine Warenpalette vollständig mit den hierfür vorgesehenen Waren beladen ist, kann bei dem erfindungsgemäße Kommissioniersystem und -verfahren die an der betreffenden Beladestation vorhandene Rückwand auf geeignete Weise automatisch entfernt bzw. umpositioniert werden, wobei beim Entfernen oder Umpositionieren der Rückwand auf geeignete Weise darauf geachtet werden muss, dass der auf der Warenpalette befindliche Warenstapel, welcher ggfs. zumindest teilweise der Rückwand anliegt, dabei nicht umgerissen wird.

Sodann kann - je nach Ausgestaltung des Systems - die betreffende Warenpalette entweder direkt an der Beladestation mittels der wenigstens einen hierfür geeignet positionierten Wickelstation mit Folie umwickelt werden oder aber mittels eines fahrerlosen Transportfahrzeugs auf einem zuvor durch die Rückwand versperrten, jedoch nun infolge Entfernung bzw. Umpositionierung der Rückwand freigegebenen Verfahrweg zu einer der Beladestation benachbarten Wickelstation transportiert werden, um dort zur Sicherung des Warenstapels auf der Palette mit Folie umwickelt zu werden. Konkrete Beispiele, wie eine solchermaßen entfernbare bzw. umpositionierbare Rückwand an den Beladestationen realisiert werden kann, werden weiter unten noch näher erläutert.

Nach Umwickelung der vollständig beladenen, auftragsspezifisch zusammengestellten Warenpalette mit Folie kann dann die Warenpalette automatisch dem weiteren Versand zugeführt werden kann, z.B. indem sie wiederum mittels eines fahrerlosen Transportfahrzeugs zu einer Versandstation gebracht wird, von wo aus sie für den weiteren Versand abgeholt werden kann. Vorteilhaft wird dabei die Warenpalette in Richtung zur Rückseite der Beladestation aus dieser heraustransportiert, so dass sich der Verfahrweg des die Warenpalette aus der Beladestation heraustransportierenden fahrerlosen Transportfahrzeugs und der Verfahrweg des frontseitig vor der Beladestation verfahrbaren Verladeroboters nicht kreuzen.

Bei dem erfindungsgemäßen Kommissioniersystem erweist es sich als vorteilhaft, dass die auftragsspezifisch zusammengestellten Warenpaletten mit noch nicht umwickeltem, also ungesichertem Warenstapel entweder keinen oder einen nur sehr kurzen Wege (von der Beladestation zur benachbarten Wickelstation) zurücklegen müssen. Dabei ist von Vorteil, wenn der zwischen Übergabestation und der an der Wickelstation einzunehmenden Position zurückzulegende Weg nicht mehr als wenige Meter (z.B. weniger als fünf, vier, drei, zwei oder ein Meter) beträgt.

Es versteht sich von selbst, dass sämtliche in dem erfindungsgemäßen Kommissioniersystem eingesetzten und zum Zwecke der automatischen Kommissionierung zu steuernden Komponenten (wie insbesondere das wenigstens eine fahrerlose Transportfahrzeug zum An- und Abtransport der verschiedenen Warenpaletten, der wenigstens eine Verladeroboter zur Verladung von Waren zwischen den an einer Übergabestation und einer Beladestation befindlichen Warenpaletten, die Entfernung/Umpositionierung der an den Beladestationen und ggfs. auch an den Übergabestationen (siehe unten) vorgesehenen Rückwände, etc.) bevorzugt durch ein zentrales oder verteiltes elektronisches Steuerungssystem gesteuert werden, in welchem alle zum Betrieb des Systems und zur Durchführung der einzelnen Kommissioniervorgänge erforderlichen Daten auf geeignete Weise vorgehalten und/oder erfasst werden. Selbstverständlich müssen die fahrerlosen Transportfahrzeuge und der Verladeroboter auch auf geeignete Weise ihre exakte Position und Orientierung innerhalb des Kommissioniersystems ermitteln können. Hierfür geeignete Systeme sind aus dem Stand der Technik in vielfältigen Ausführungsvarianten bereits bekannt.

In einer ersten bevorzugten Ausgestaltung des erfindungsgemäßen Kommissioniersystems kann ergänzend vorgesehen sein, dass auch an den Übergabestationen jeweils eine automatisch entfernbare oder automatisch umpositionierbare Rückwand vorgesehen ist, die während des Entnehmens der dortigen Waren als rückseitiger Anschlag für den auf der Warenpalette befindlichen Warenstapel dient und die bei Bedarf derart entfernbar oder umpositionierbar ist, dass die Warenpalette nach Entfernung/Umpositionierung der Rückwand mit einem fahrerlosen Transportfahrzeug auf einem zuvor durch die Rückwand versperrten Verfahrweg (d.h. zur Rückseite) aus der Übergabestation abtransportiert werden kann.

Bei dieser Systemgestaltung dient somit die (entfernbare bzw. geeignet umpositionierbare) Rückwand zur Stabilisierung des auf der Warenpalette befindlichen Stapels beim Entnehmen von Waren mittels des Verladeroboters, wobei die Rückwand auch die Verwendung solcher Greifsysteme gestattet, die zum sicheren Greifen von Waren einen gewissen Gegendruck benötigen.

Bei entfernter (bzw. geeignet umpositionierter) Rückwand kann die in der Übergabestation befindliche Warenpalette mittels eines fahrerlosen Transportfahrzeugs vorteilhaft in Richtung zu deren (dem Verladeroboter abgewandten) Rückseite aus der Übergabestation abtransportiert werden. Ferner kann die Übergabestation (bei entfernter bzw. geeignet umpositionierter Rückwand) vorteilhaft von ihrer Rückseite kommend mit einer Warenpalette bestückt werden, wobei dies ersichtlich auch für die Beladestationen gilt.

Grundsätzlich könnte eine zur Verwendung in der vorliegenden Erfindung geeignete Rückwand aus einer einfachen Platte bestehen, die die jeweilige Belade- oder Übergabestation rückseitig begrenzt und die mittels einer geeigneten Führungsstruktur unter Verwendung eines elektromotorischen Antriebs zum Zwecke der Entfernung oder Umpositionierung auf geeignete Weise verschiebbar ist.

Besonders bevorzugt kann im Rahmen der vorliegenden Erfindung jedoch vorgesehen sein, dass die Rückwand an wenigstens einer Übergabe- oder Beladestation durch ein seitlich geführtes Rolltor gebildet ist, welches zum Zwecke der Entfernung der Rückwand nach vertikal oben angehoben und eingerollt wird.

Ein derartiges (elektromechanisch angetriebenes) Rolltor, welches in industriell häufig verwendeter Ausführung als sogenanntes Schnelllauftor ausgestaltet sein kann, kann wegen der seitlichen Führung und bei stabiler Ausführung der das Rolltor bildenden Profile eine für den beabsichtigten Zweck hinreichend stabile und hinreichend schnell entfernbare Rückwand für die unmittelbar benachbart dazu (in der Übergabe- oder Beladestation) positionierte Warenpalette und den darauf befindlichen Warenstapel bilden.

Damit bei dem durch Anheben des Schnelllauftors erfolgenden Entfernen der (durch das Schnelllauftor gebildeten) Rückwand nicht ein dem Rolltor anliegender Warenstapel umgerissen wird, kann im Rahmen der Erfindung ferner vorteilhaft vorgesehen sein, dass das Kommissioniersystem dazu eingerichtet ist, vor Anheben des Rolltors einen Abstand zwischen dem Rolltor und einer dem Rolltor (unmittelbar) benachbarten Warenpalette inklusive des darauf befindlichen Warenstapels herzustellen, indem die Warenpalette mittels eines fahrerlosen Transportfahrzeugs von dem als Rückwand dienenden Rolltor weggerückt wird. Sodann kann das Rolltor gefahrlos geöffnet werden und die Warenpalette mit Folie umwickelt oder (mittels des fahrerlosen Transportfahrzeugs) auf einem durch das geöffnete Rolltor freigegebenen Verfahrweg rückseitig aus der Übergabe- oder Beladestation ausgefahren werden.

Als besonders zweckmäßig erweist es ferner, wenn die Übergabe- und Beladestationen jeweils ein Haltegestell zur Halterung der Warenpaletten in einer gegenüber dem Boden erhöhten Position aufweisen, so dass das wenigstens eine fahrerlose Transportfahrzeug unter eine in der Übergabe- oder Beladestation befindliche Warenpalette einfahren oder unter dieser hindurchfahren kann. Die hiermit verbundenen Vorteile werden weiter unten anhand eines Ausführungsbeispiels näher erläutert.

Als besonders platzsparend und sinnvoll erweist es sich ferner, wenn die Übergabe- und Verladestationen mit einander zuweisenden Frontseiten in zweireihiger Anordnung auf beiden Seiten des Verfahrwegs des zwischen den beiden Reihen verfahrbaren Verladeroboters angeordnet sind.

Ferner kann in zweckmäßiger Weise vorgesehen sein, dass die wenigstens eine Wickelstation mittels eines fahrerlosen Transportfahrzeugs verfahrbar ist, so dass die Wickelstation bei vollständiger Beladung einer kundenspezifischen Warenpalette an einer bestimmten Beladestation zu einer geeigneten Position in unmittelbarer Nähe der betreffenden Beladestation verfahrbar ist, damit die betreffende Warenpalette mittels der Wickelstation direkt an der Beladestation oder (unmittelbar) benachbart hierzu mit Folie umwickelt werden kann. Auf diese Weise können mit nur einer (verfahrbaren) Wickelstation Warenpaletten an unterschiedlichen Beladestationen in Folie gewickelt werden, ohne dass die noch nicht mit Folie umwickelte Warenpalette dabei größere Wege zurücklegen muss.

Wie bereits einleitend erwähnt, betrifft die vorliegende Erfindung nicht nur einer Kommissioniersystem, sondern auch ein Kommissionierverfahren. Das erfindungsgemäße Kommissionierverfahren zur automatischen Zusammenstellung von auftragsspezifischen Warenpaletten in einem Zentrallager umfasst dabei die folgenden Schritte
(A) Bereitstellen einer Mehrzahl an Warenpaletten mit den für die auftragsspezifischen Warenpaletten benötigten Waren an einer Mehrzahl von Übergabestationen
(B) Bereitstellen einer Mehrzahl an zunächst leeren Warenpaletten an einer Mehrzahl an Beladestationen
(C) Auftragsspezifisches Beladen der an den Beladestationen befindlichen Warenpaletten unter Verwendung eines frontseitig vor den Übergabe- und Beladestationen verfahrbaren Verladeroboters, mit welchem Waren von den an den Übergabestationen befindlichen Warenpaletten entnehmbar und anschließend auf die an den Beladestationen befindlichen Warenpaletten stapelbar sind,
(D) Umwickeln der vollständig beladenen, auftragsspezifischen Warenpaletten mit Folie mittels einer Wickelstation,
wobei an den Beladestationen jeweils eine automatisch entfernbare oder automatisch umpositionierbare Rückwand vorgesehen ist, die während des Beladens der dortigen Warenpaletten gemäß Schritt (C) als rückseitiger Anschlag für den auf der Warenpalette zu bildenden Warenstapel dient und die nach vollständiger Beladung der an einer Beladestation befindlichen Warenpalette derart entfernbar oder umpositionierbar ist, dass die beladene Warenpalette nach Entfernung oder Umpositionierung der Rückwand entweder direkt an der Beladestation gemäß Schritt (D) mit Folie umwickelt werden kann oder mit einem fahrerlosen Transportfahrzeug auf einem zuvor durch die Rückwand versperrten Verfahrweg zu einer benachbarten Wickelstation transportiert werden kann, um dort mit Folie umwickelt zu werden.

Ersichtlich gelten für das erfindungsgemäße Kommissionierverfahren die gleichen Aspekte wie für das zuvor erläuterte Kommissioniersystem. Alle bevorzugten Ausgestaltungen und Weiterbildungen des erfindungsgemäßen Systems sind gleichermaßen auf das erfindungsgemäße Kommissionierverfahren anwendbar.

Nachfolgend wird die Erfindung noch anhand eines in der Zeichnung veranschaulichten Ausführungsbeispiels erläutert. Dabei zeigt
- Fig. 1: eine schematische Draufsicht auf ein Ausführungsbeispiel eines erfindungsgemäßen Kommissioniersystems in einer ersten Konfiguration,
- Fig. 2: eine schematische Draufsicht auf das Ausführungsbeispiel aus Fig. 1 in einer zweiten Konfiguration,
- Fig. 3: eine schematische Frontalansicht auf zwei in der Erfindung verwendbare Beladestationen mit einer auftragsspezifisch zusammengestellten Warenpalette und einer durch ein Rolltor gebildeten Rückwand,
- Fig. 4a und 4b: zwei schematische Seitenansichten auf die in Fig. 3 dargestellte Beladestation zur Veranschaulichung des Wegrückens der Warenpalette,
- Fig. 5a a und 5b: eine schematische Frontalansicht und eine schematische Seitenansicht auf die bereits in den Fig. 3, 4a und 4b gezeigte Beladestation mit geöffnetem Rolltor,
- Fig. 6: eine schematische Seitenansicht auf eine zur Verwendung in der Erfindung geeignete Wickelstation.

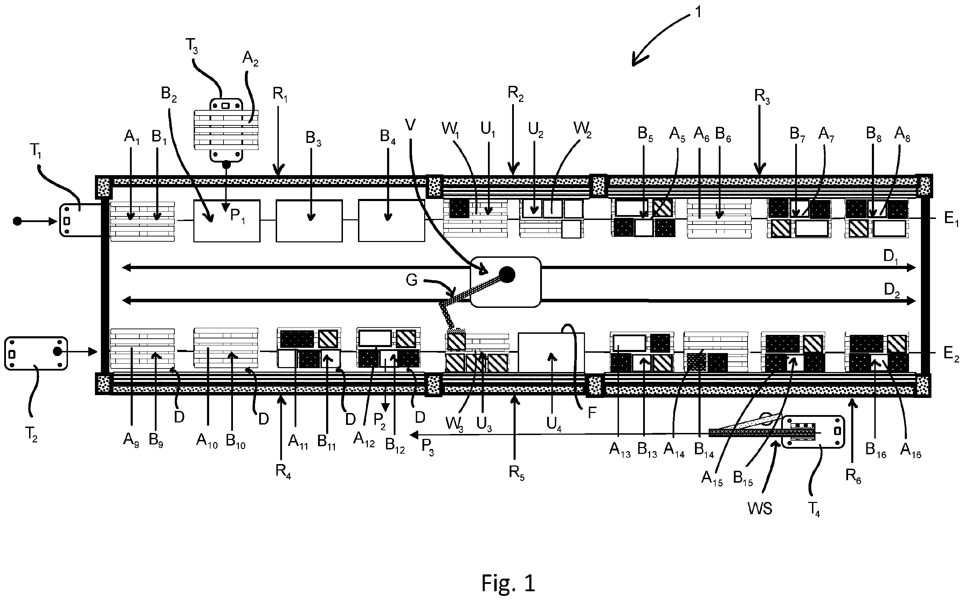

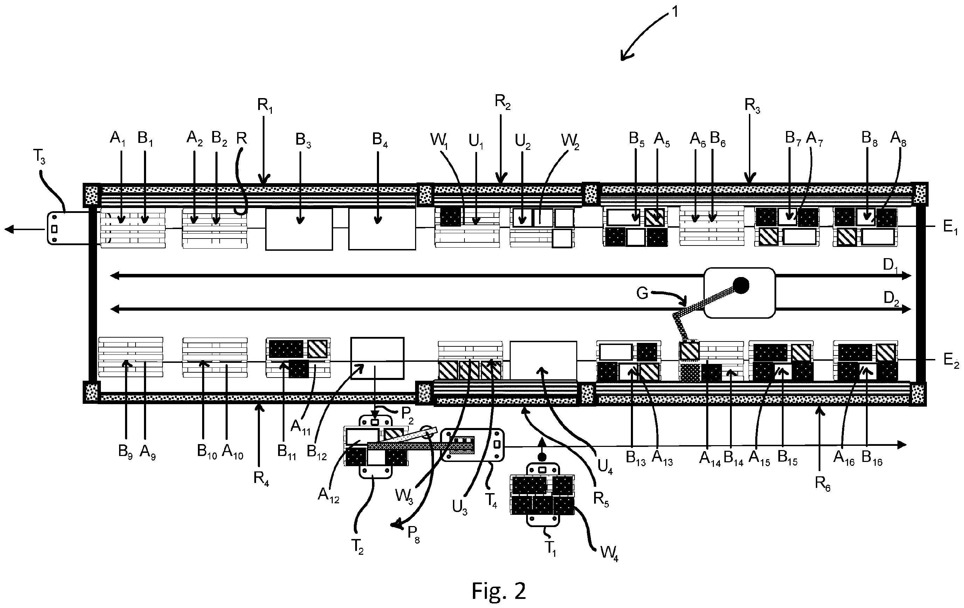

Die Figuren 1 und 2 zeigen eine schematische Draufsicht auf ein Ausführungsbeispiel eines erfindungsgemäßen und bereits im Betrieb befindlichen Kommissioniersystems 1 zur automatischen Zusammenstellung von auftragsspezifischen Warenpaletten in einem Zentrallager. Das Kommissioniersystem 1 umfasst dabei eine Mehrzahl an Übergabestationen U₁, U₂, U₃, U₄ zur Bereitstellung von - vorzugsweise sortenreinen - Warenpaletten W₁, W₂, W₃, W₄ mit den für die durchzuführenden Kommissioniervorgänge benötigten Waren sowie eine Mehrzahl an Beladestationen B₁, B₂, ..., B₁₆ für die auftragsspezifisch zu beladenden Warenpaletten A₁, A₂, ..., A₁₆.

Die Übergabe- und Beladestationen U₁, U₂, U₃, U₄; B₁, B₂, ..., B₁₆ sind im gezeigten Ausführungsbeispiel in zweireihiger Anordnung mit aufeinander zuweisenden Frontseiten auf beiden Seiten des durch die beiden Doppelpfeile D₁, D₂ veranschaulichten Verfahrwegs des zwischen den beiden Reihen E₁, E₂ verfahrbaren Verladeroboters V angeordnet. Mittels des Verladeroboters V bzw. mittels des daran angeordneten Greifwerkzeugs G können insbesondere einzelne Waren bzw. Warenbehältnisse von einer in einer Übergabestation U₁, U₂, U₃, U₄ befindlichen Warenpalette W₁, W₂, W₃, W₄ entnommen und anschließend auf eine an einer Beladestation B₁, B₂, ..., B₁₆ befindlichen Warenpaletten A₁, A₂, ..., A₁₆ abgesetzt bzw. gestapelt werden.

In der in Fig. 1 dargestellten Konfiguration des Kommissioniersystems 1 ist zu erkennen, wie der Verladeroboter V einen auf einer Übergabestation U₃ befindlichen Karton greift, und dass dieser nach geeignetem Positionswechsel des Verladeroboters V zu der in Fig. 2 eingenommenen Position auf einer an einer Beladestation B₁₄ befindlichen Warenpalette abgelegt wird.

Ferner umfasst das Kommissioniersystem 1 eine Mehrzahl an autonom verfahrbaren, fahrerlosen Transportfahrzeugen T₁, T₂, T₃ zum automatischen An- und Abtransport von Warenpaletten W₁, W₂, W₃, W₄, A₁, A₂, ..., A₁₆ zu den und von den Übergabe- oder Beladestationen. Die dabei von einem Transportfahrzeug zu den jeweiligen Übergabe- und Beladestationen U₁, U₂, U₃, U₄; B₁, B₂, ..., B₁₆ zu transportierenden Warenpaletten können dabei an einer geeigneten Abholstation im Zentrallager (nicht dargestellt) bereitgestellt werden. Im vorliegenden Ausführungsbeispiel ist eine Verwendung der in der Logistik häufig verwendeten (Euro-)Paletten gezeigt, wobei die vorliegende Erfindung selbstverständlich auch die Verwendung anders gestalteter Paletten in geeigneter Ausführung gestattet.

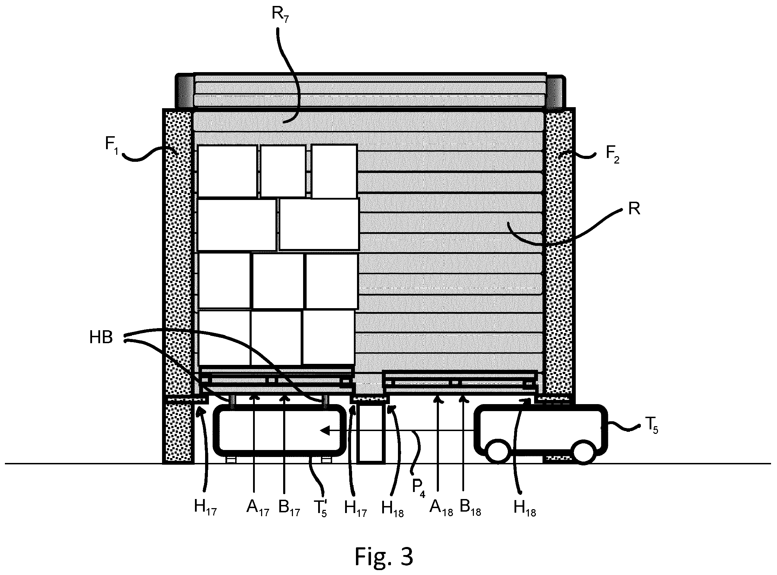

Weitere Details zur vorteilhaften Gestaltung der Übergabe- und Beladestationen werden weiter unten anhand der Darstellung in Fig. 3 näher erläutert.

Unmittelbar hinter den einzelnen Übergabe- und Beladestationen U₁, U₂, U₃, U₄; B₁, B₂, ..., B₁₆, d.h. rückseitig hiervon, sind vorliegend insgesamt sechs Rolltore R₁, R₂, R₃, R₄, R₅, R₆ angeordnet, die im geschlossenen (d.h. nach unten gefahrenen) Zustand eine Rückwand für die unmittelbar vor dem jeweiligen Rolltor angeordneten Übergabe- und Beladestationen U₁, U₂, U₃, U₄; B₁, B₂, ..., B₁₆ bzw. die dort angeordneten Warenpaletten ausbilden, wobei die Rückwand R durch Öffnen des jeweiligen Rolltors auf einfache und schnelle Weise entfernt werden kann. Auch dies wird weiter unten anhand der Fig. 3, 4a, 4b, 5a und 5b noch näher erläutert.

In der in Fig. 1 dargestellten Konfiguration des Kommissioniersystems 1 befindet sich ein Rolltor R₁ in geöffnetem Zustand, während alle weiteren Rolltore R₂, R₃, R₄, R₅, R₆ geschlossen sind. So kann mittels des fahrerlosen Transportfahrzeugs T₃ eine (leere) Warenpalette A₂ gemäß Pfeil P₁ durch das geöffnete Rolltor R₁ hindurch gefahren und die Warenpalette A₂ an der Beladestation B₂ abgestellt werden. Anschließend kann das Rolltor R₁ geschlossen werden und dann - in der in Fig. 2 dargestellten Konfiguration - als Rückwand R für die unmittelbar vor dem Rolltor R₁ befindlichen Warenpaletten A₁, A₂ dienen.

Ferner sei darauf hingewiesen, dass die sich unmittelbar benachbart zu dem in Fig. 1 unten links dargestellten Rolltor R₄ befindlichen Warenpaletten A₉, A₁₀, A₁₁, A₁₂ in der in Fig. 1 dargestellten Systemkonfiguration bereits zuvor (mittels des wenigstens einen fahrerlosen Transportfahrzeugs T₁, T₂, T₃) jeweils in eine Position gebracht wurden, in der die jeweilige Warenpalette A₉, A₁₀, A₁₁, A₁₂ inkl. etwaiger darauf befindlicher Waren in einem (geringen) Abstand D von der durch das Rolltor R₄ gebildeten Rückwand entfernt sind. Daher kann sodann das Rolltor R₄ geöffnet (d.h. die hinter den Warenpaletten A₉, A₁₀, A₁₁, A₁₂ befindliche Rückwand entfernt) werden, um die an der Beladestation B₁₂ befindliche Warenpalette A₁₂, welche zuvor bereits vollständig auftragsspezifisch mit Waren bestückt wurde, mittels des Transportfahrzeugs T₂ gemäß Pfeil P₂ auf einem zuvor durch das geschlossene Rolltor versperrten Verfahrweg rückseitig aus der Beladestation B₁₂ herauszufahren (vgl. hierzu auch Fig. 2).

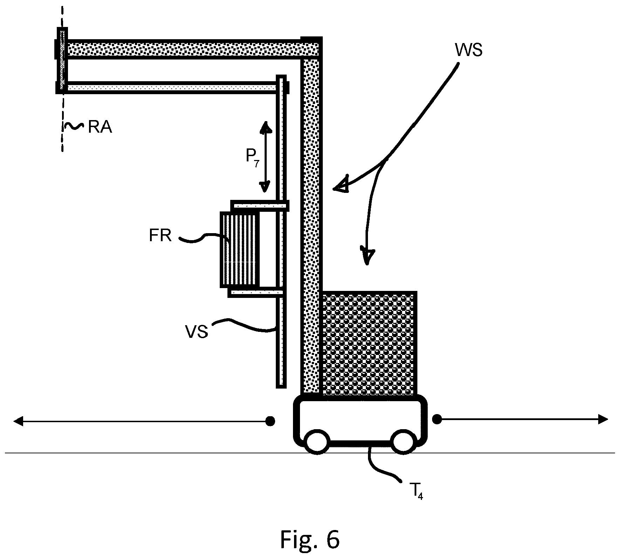

Das Kommissioniersystem 1 weist ferner wenigstens eine Wickelstation WS auf, mit welcher die Warenpaletten nach vollständiger Beladung mit den auftragsspezifisch für sie vorgesehenen Waren mit Folie umwickelt werden. Die Wickelstation WS ist, wie dies in Fig. 6 näher dargestellt ist, fest auf einem fahrerlosen Transportfahrzeug T₄ montiert und kann so aus der in Fig. 1 gezeigten Position in Richtung des Pfeils P₂ in die Nähe der Beladestation B₁₂ (d.h. in die Fig. 2 gezeigte Position) verfahren werden, so dass die aus der Beladestation B₁₂ nach hinten herausgefahrene Warenpalette A₁₂ vor der Umwicklung mit Folie keine größeren Wege mehr zurücklegen muss. Sofern die Gestaltung der Rolltore R₁, R₂, R₃, R₄, R₅, R₆ und der Wickelstation WS es erlauben, können die vollständig beladenen Warenpaletten bei geöffnetem Rolltor ggfs. auch direkt an der jeweiligen Beladestation mit Folie umwickelt werden.

Und schließlich ist in Fig. 2 zu erkennen, dass mittels des Transportfahrzeugs T1 bereits eine neue (sortenreine) Warenpalette W4 herbeigeschafft wird, die nach Öffnen des Rolltors R₅ an der bisher nicht belegten Übergabestation U4 abgestellt werden kann.

Fig. 3 zeigt eine Frontalansicht auf zwei zur Verwendung in der Erfindung geeignete Beladestationen B₁₇, B₁₈ mit einem hinter den beiden Beladestationen B₁₇, B₁₈ angeordneten Rolltor R₇, wobei die Übergabe- und Beladestationen des erfindungsgemäßen Kommissioniersystems letztlich identisch ausgestaltet sein können.

An der in Fig. 3 links dargestellten Beladestation B₁₇ befindet sich eine bereits vollständig auftragsspezifisch mit einem Warenstapel beladene Warenpalette A₁₇, während die an der in Fig. 3 rechts dargestellten Beladestation B₁₈ befindliche Warenpalette Aₗ₈ noch leer ist.

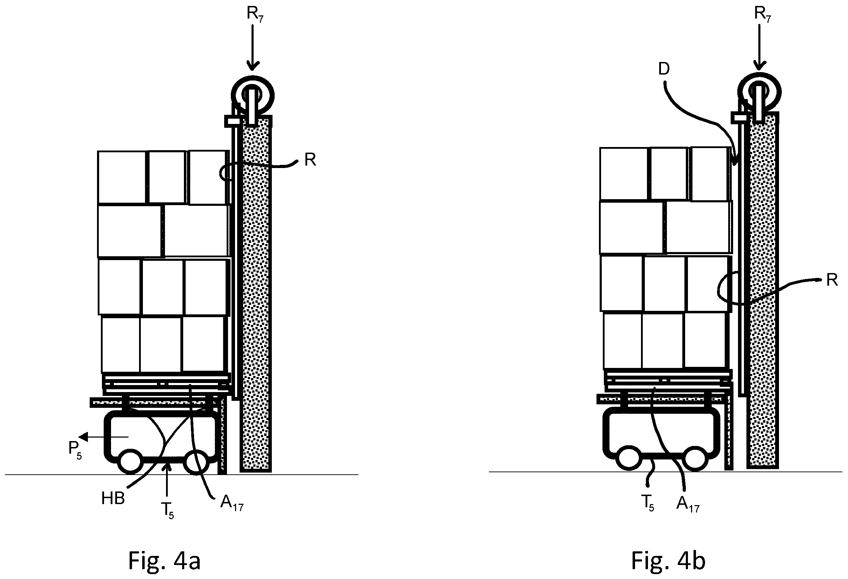

Die das Rolltor R₇ bildenden Profile bzw. Profilleisten bilden bei geschlossenem Rolltor R₇, wie in Fig. 3 dargestellt, eine Rückwand R aus, gegen welche sich die auf den Warenpaletten A₁₇, A₁₈ vorhandenen Warenstapel während der Be- oder Entladevorgänge abstützen können, wie dies auch in der in Fig. 4a gezeigten Seitenansicht dargestellt ist. Die Profilleisten sind dabei links- und rechtsseitig in bzw. an seitlichen Führungen F₁, F₂ stabil geführt, so dass das Rolltor R₇ eine für den benötigten Zweck hinreichend stabile Rückwand R ausbilden kann.

Die Beladestationen B₁₇, B₁₈ weisen jeweils ein Haltegestell H₁₇, H₁₈ zur (seitlichen) Halterung der Warenpaletten A₁₇, A₁₈ in einer gegenüber dem Boden erhöhten Position auf, so dass ein fahrerloses Transportfahrzeug T₅ unter eine in der Beladestation befindliche Warenpalette A₁₇, A₁₈ einfahren oder unter dieser hindurchfahren kann. An den Transportfahrzeugen sind oberseitig mehrere nach oben ausfahrbare Hubbolzen HB vorgesehen, mit denen das unterhalb einer Warenpalette befindliche Transportfahrzeug T₅' eine Warenpalette anheben kann.

Es sei außerdem darauf hingewiesen, dass die bei dem in den Fig. 1 und 2 dargestellten Kommissioniersystem 1 verwendeten Übergabe- und Beladestationen U₁, U₂, U₃, U₄; B₁, B₂, ..., B₁₆ letztlich identisch aufgebaut sind bzw. sein können, wobei sich als einziger Unterschied ergibt, dass bei dem Ausführungsbeispiel gemäß Fig. 1 und 2 die im Bereich der Beladestationen vorgesehenen Rolltore R₁, R₃, R₄, R₆ sich jeweils in ihrer seitlichen Erstreckung über die Breite von vier (und nicht zwei) Beladestationen erstrecken. Selbstverständlich könnte auch pro Belade- und/oder Übergabestation jeweils ein separates dahinter befindliches Rolltor vorgesehen sein.

Erwähnenswert ist außerdem, dass die Unterkante des geschlossenen Rolltors R₇ auf einer gegenüber dem Boden solchermaßen erhöhten Niveau liegt, dass die verwendeten Transportfahrzeuge selbst bei geschlossenem Rolltor unter diesem hindurchfahren können.

Wenn nun die in Fig. 3 links dargestellte und bereits vollständig beladene Warenpalette A₁₇ rückseitig aus der Beladestation ausgefahren und zu einer benachbarten Wickelstation WS transportiert werden soll, dann muss hierzu natürlich das Rolltor R₇ geöffnet werden. Bevor dies jedoch erfolgen kann, muss zunächst die Warenpalette A₁₇ samt dem darauf befindlichen Warenstapel (und ggfs. auch die Warenpalette A₁₈) etwas von der durch das Rolltor R₇ gebildeten Rückwand R weggerückt werden, da ansonsten wegen der gegebenenfalls an dem Rolltor R₇ anliegenden Waren bzw. Warenbehältnisse der Warenstapel beim Öffnen des Rolltors R₇ umfallen könnte.

Hierzu kann ein fahrerloses Transportfahrzeug T₅ beispielsweise von rechts kommend gemäß Pfeil P₄ unter der in Fig. 3 rechts dargestellten Warenpalette A₁₈ hindurchfahren bis es sich unmittelbar unterhalb der in Fig. 3 links dargestellten Warenpalette A₁₇ befindet. Dort kann es sich dann beispielsweise um einen Winkel von 90° drehen bis es die in Fig. 3 mit T₅' bezeichnete Position einnimmt, in welcher die Laufräder des Transportfahrzeugs in einer senkrecht zur Zeichenebene liegenden Richtung ausgerichtet sind.

Fig. 4a zeigt diese Anordnung in einer Seitenansicht, wobei gut zu sehen ist, dass das Transportfahrzeug T₅ die Warenpalette A₁₇ mittels der nach oben ausgefahrenen Hubbolzen HB etwas anhebt und dass der auf der Warenpalette A₁₇ befindliche Warenstapel der (durch das geschlossene Rolltor R₇ gebildeten) Rückwand R zumindest teilweise anliegt.

Ausgehend von der in Fig. 4a gezeigten Position kann sodann das Transportfahrzeug T₅ geringfügig in Richtung des Pfeils P₅ gefahren werden, bis die Warenpalette A₁₇ samt dem darauf befindlichen Warenstapel einen gewissen Abstand D von dem Rolltor R₇ bzw. der hierdurch gebildeten Rückwand R entfernt ist, wie dies in Fig. 4b dargestellt ist.

Sodann kann das Rolltor R₇ gefahrlos geöffnet (d.h. nach oben gefahren und gleichzeitig eingerollt) werden, wodurch die die Beladestation B₁₇ nach hinten begrenzende Rückwand R entfernt wird.

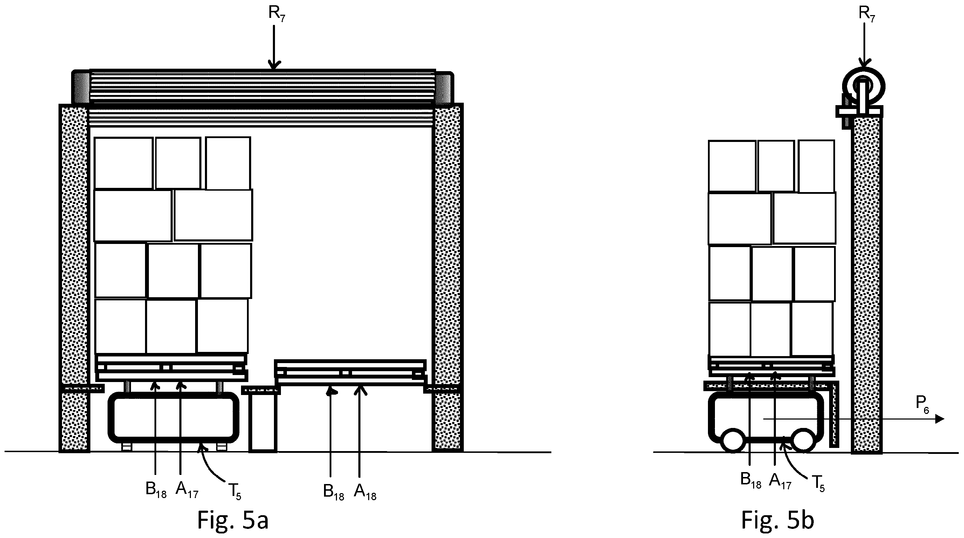

Damit ergibt sich dann die in Fig. 5a in einer Frontansicht und die in Fig. 5b in einer Seitenansicht dargestellte Situation mit geöffnetem Rolltor R₇. Die Warenpalette A₁₇ kann sodann gemäß Pfeil P6 (siehe Fig. 5b) rückseitig aus der Beladestation B₁₇ ausgefahren und einer bevorzugt unmittelbar dahinter positionierten Wickelstation WS zum Umwickeln der Warenpalette mit Folie zugeführt werden.

Fig. 6 zeigt schließlich noch eine im Rahmen der Erfindung zweckmäßig zur Verwendung kommende Wickelstation WS, die, wie bereits weiter oben erwähnt, auf einem fahrerlosen Transportfahrzeug T4 installiert ist, um ihrerseits an beliebige Positionen innerhalb des Kommissioniersystems 1 verfahren werden zu können.

Die Wickelstation WS umfasst eine an einer Vertikalstange VS geführte und gemäß Doppelpfeil P7 elektromotorisch verschiebbare Folienrolle FR. Die Vertikalstange VS ist mittels einer gelenkigen Anordnung ihrerseits drehbar um eine Rotationsachse RA angeordnet (vgl. auch Pfeil P7 in Fig. 2), so dass die Folienrolle FR unter gleichzeitigem Abrollen der Folie mehrfach auf veränderlicher Höhe um eine bestückte Warenpalette herumbewegt werden kann, bis die Warenpalette samt darauf befindlichem Warenstapel vollständig seitlich mit Folie umwickelt ist.

Selbstverständlich weist das vorstehend beschriebene Kommissioniersystem 1 eine zentrale Steuereinheit (nicht dargestellt) auf, mit welcher alle zu steuernden Komponenten des Systems zur Durchführung der benötigten Kommissioniervorgänge auf geeignete Weise gesteuert werden können. Autonom verfahrbare, fahrerlose Transportfahrzeuge (häufig auch "automatic guided vehicles" bezeichnet), die sich zum Einsatz in dem erfindungsgemäßen Kommissioniersystem eignen, werden von der Anmelderin bereits seit einigen Jahren kommerziell vertrieben.

## Patentansprüche

1. Kommissioniersystem (1) zur automatischen Zusammenstellung von auftragsspezifischen Warenpaletten in einem Zentrallager umfassend
- eine Mehrzahl an Übergabestationen (U₁, U₂, U₃, U₄) zur Bereitstellung von Warenpaletten (W₁, W₂, W₃, W₄) mit den für die auftragsspezifischen Warenpaletten benötigten Waren,
- eine Mehrzahl an Beladestationen (B₁, B₂, ..., B₁₈) für die auftragsspezifisch zu beladenden Warenpaletten (A₁, A₂, ..., A₁₈),
- wenigstens ein autonom verfahrbares, fahrerloses Transportfahrzeug (T₁, T₂, T₃, T₅) zum automatischen An- und Abtransport von Warenpaletten zu den und von den Übergabe- oder Beladestationen (U₁, U₂, U₃, U₄; B₁, B₂, ... , B₁₈),
- wenigstens einen frontseitig vor den Übergabe- und Beladestationen verfahrbaren Verladeroboter (V), mit dem zur Zusammenstellung von auftragsspezifischen Warenpaletten an den Beladestationen iterativ Waren von den an den Übergabestationen befindlichen Warenpaletten entnehmbar und anschließend auf die an den Beladestationen befindlichen Warenpaletten stapelbar sind,
- wenigstens eine Wickelstation (WS) zur Umwicklung einer auftragsspezifischen Warenpalette mit einer Folie,
wobei an den Beladestationen (B₁, B₂, ..., B₁₈) jeweils eine automatisch entfernbare oder automatisch umpositionierbare Rückwand (R) vorgesehen ist, die während des Beladens der dortigen Warenpaletten (A₁, A₂, ..., A₁₈) als rückseitiger Anschlag für den auf der Warenpalette (A₁, A₂, ..., A₁₈) zu bildenden Warenstapel dient und die nach vollständiger Beladung der an einer Beladestation (B₁, B₂, ..., B₁₈) befindlichen Warenpalette (A₁, A₂, ..., A₁₈) derart entfernbar oder umpositionierbar ist, dass eine beladene Warenpalette nach Entfernung oder Umpositionierung der Rückwand (R) entweder direkt an der Beladestation mittels einer geeignet positionierten Wickelstation (WS) mit Folie umwickelt werden kann oder aber mit einem fahrerlosen Transportfahrzeug (T₁, T₂, T₃, T₅) auf einem zuvor durch die Rückwand (R) versperrten Verfahrweg zu einer benachbarten Wickelstation (WS) transportiert werden kann, um dort mit Folie umwickelt zu werden.

2. Kommissioniersystem nach Anspruch 1,
**dadurch gekennzeichnet, dass**
dass auch an den Übergabestationen (U₁, U₂, U₃, U₄) jeweils eine automatisch entfernbare oder automatisch umpositionierbare Rückwand (R) vorgesehen ist, die während des Entnehmens der dortigen Waren als rückseitiger Anschlag für den auf der Warenpalette (W₁, W₂, W₃, W₄) befindlichen Warenstapel dient und die bei Bedarf derart entfernbar oder umpositionierbar ist, dass die Warenpalette (W₁, W₂, W₃, W₄) mit einem fahrerlosen Transportfahrzeug (T₁, T₂, T₃, T₅) auf einem zuvor durch die Rückwand (R) versperrten Verfahrweg aus der Übergabestation (U₁, U₂, U₃, U₄) abtransportiert werden kann.

3. Kommissioniersystem nach einem der vorangehenden Patentansprüche,
**dadurch gekennzeichnet,**
**dass** die Rückwand (R) an wenigstens einer Übergabe- oder Beladestation (U₁, U₂, U₃, U₄; B₁, B₂, ..., B₁₈) durch ein seitlich geführtes Rolltor (R₁, R₂, R₃, R₄, R₅, R₆, R₇) gebildet ist, welches zum Zwecke der Entfernung der Rückwand (7) nach vertikal oben angehoben und eingerollt wird.

4. Kommissioniersystem nach Anspruch 3,
**dadurch gekennzeichnet,**
**dass** das Kommissioniersystem (1) dazu eingerichtet ist, vor Anheben des Rolltors (R₁, R₂, R₃, R₄, R₅, R₆, R₇) einen Abstand (D) zwischen dem Rolltor und einer dem Rolltor benachbarten Warenpalette inklusive des darauf befindlichen Warenstapels herzustellen, indem die Warenpalette mittels eines fahrerlosen Transportfahrzeugs (T₁, T₂, T₃, T₅) von dem als Rückwand (R) dienenden Rolltor (R₁, R₂, R₃, R₄, R₅, R₆, R₇) weggerückt wird.

5. Kommissioniersystem nach einem der vorangehenden Patentansprüche,
**dadurch gekennzeichnet,**
**dass** die Übergabe- und Beladestationen (U₁, U₂, U₃, U₄; B₁, B₂, ..., B₁₈) jeweils ein Haltegestell (H₁₇, H₁₈) zur Halterung der Warenpaletten (W₁, W₂, W₃, W_{4;} A₁, A₂, ..., A₁₈) in einer gegenüber dem Boden erhöhten Position aufweisen, so dass das wenigstens eine fahrerlose Transportfahrzeug (T₁, T₂, T₃, T₅) unter eine in der Übergabe- oder Beladestation befindliche Warenpalette einfahren oder unter dieser hindurchfahren kann.

6. Kommissioniersystem nach einem der vorangehenden Patentansprüche,
**dadurch gekennzeichnet,**
**dass** die Übergabe- und Verladestationen (U₁, U₂, U₃, U₄; B₁, B₂, ..., B₁₈) mit einander zuweisenden Frontseiten in zweireihiger Anordnung auf beiden Seiten des Verfahrwegs des zwischen den beiden Reihen verfahrbaren Verladeroboters (V) angeordnet sind.

7. Kommissioniersystem nach einem der vorangehenden Patentansprüche,
**dadurch gekennzeichnet,**
**dass** die wenigstens eine Wickelstation (WS) mittels eines fahrerlosen Transportfahrzeugs (T₄) verfahrbar ist, so dass die Wickelstation (WS) bei vollständiger Beladung einer kundenspezifischen Warenpalette an einer bestimmten Beladestation zu einer geeigneten Position in unmittelbarer Nähe der betreffenden Beladestation verfahrbar ist, damit die Warenpalette mittels der Wickelstation (WS) direkt an der Beladestation oder unmittelbar benachbart hierzu in eine Folie gewickelt werden kann.

8. Kommissionierverfahren zur automatischen Zusammenstellung von auftragsspezifischen Warenpaletten in einem Zentrallager umfassend die folgenden Schritte
(A) Bereitstellen einer Mehrzahl an Warenpaletten mit den für die auftragsspezifischen Warenpaletten benötigten Waren an einer Mehrzahl von Übergabestationen
(B) Bereitstellen einer Mehrzahl an zunächst leeren Warenpaletten an einer Mehrzahl an Beladestationen
(C) Auftragsspezifisches Beladen der an den Beladestationen befindlichen Warenpaletten unter Verwendung eines frontseitig vor den Übergabe- und Beladestationen verfahrbaren Verladeroboters, mit welchem Waren von den an den Übergabestationen befindlichen Warenpaletten entnehmbar und anschließend auf die an den Beladestationen befindlichen Warenpaletten stapelbar sind,
(D) Umwickeln der vollständig beladenen, auftragsspezifischen Warenpaletten mit Folie mittels einer Wickelstation,
wobei an den Beladestationen jeweils eine automatisch entfernbare oder automatisch umpositionierbare Rückwand vorgesehen ist, die während des Beladens der dortigen Warenpaletten gemäß Schritt (C) als rückseitiger Anschlag für den auf der Warenpalette zu bildenden Warenstapel dient und die nach vollständiger Beladung der an einer Beladestation befindlichen Warenpalette derart entfernbar oder umpositionierbar ist, dass die beladene Warenpalette nach Entfernung oder Umpositionierung der Rückwand entweder direkt an der Beladestation gemäß Schritt (D) mit Folie umwickelt werden kann oder mit einem fahrerlosen Transportfahrzeug auf einem zuvor durch die Rückwand versperrten Verfahrweg zu einer benachbarten Wickelstation transportiert werden kann, um dort mit Folie umwickelt zu werden.
